# EUROPEAN PATENT APPLICATION

(11) **EP 4 797 826 A1**
(43) Date of publication of application: **26.08.2026**
(21) Application number: 23955680.6
(22) Date of filing: 17.10.2023
(51) Int. Cl.: H04W 72/04, H04B 7/06

(54) **SENSING METHOD, APPARATUS AND SYSTEM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2023/125072
(87) International publication number: WO 2025/081352

(57) **Abstract**

The present disclosure relates to a sensing method, apparatus and system. The sensing method comprises: a transmitter determining a precoding vector for a cyclic shift, wherein the precoding vector includes cyclic shift information of a plurality of sensing reference signal ports; executing cyclic shift precoding of the plurality of sensing reference signal ports on the basis of the precoding vector and modulation symbols, wherein the modulation symbols are symbols which are mapped to resource particles after a first sequence has been subjected to constellation modulation; and sending sensing reference signals on the basis of transmitted signal vectors which have been subjected to cyclic shift precoding. In the embodiments of the present disclosure, sensing reference signals of different ports can be simultaneously sent by using different beams on the same time-frequency resource, multi-beam simultaneous scanning can be supported, and relatively low time-frequency resource overheads can be maintained.

## Description

### TECHNICAL FIELD

The present disclosure relates to the field of communication technologies, and in particular to a sensing method, an apparatus, and a sensing system.

### BACKGROUND

In wireless sensing, it is usually necessary to estimate the distance, azimuth angle, and speed of a sensing target. In order to implement wireless sensing, it is usually necessary to transmit a reference signal for sensing.

### SUMMARY

Embodiments of the present disclosure provide a sensing method, an apparatus, and a sensing system.

According to a first aspect of the embodiments of the present disclosure, a sensing method is provided, performed by a transmitter, the method including:
determining a precoding vector for cyclic shift, wherein the precoding vector includes cyclic shift information of a plurality of sensing reference signal ports;
performing cyclic-shift precoding of the plurality of sensing reference signal ports according to the precoding vector and modulation symbols, wherein the modulation symbols are symbols obtained by mapping a first sequence subjected to constellation modulation onto resource elements; and
sending a sensing reference signal according to a transmit signal vector after cyclic-shift precoding.

According to a second aspect of the embodiments of the present disclosure, a sensing method is provided, performed by a receiver, the method including:
receiving a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

According to a third aspect of the embodiments of the present disclosure, a transmitter is provided, including:
a processing module, configured to determine a precoding vector for cyclic shift, wherein the precoding vector includes cyclic shift information of a plurality of sensing reference signal ports, and configured to perform cyclic-shift precoding of the plurality of sensing reference signal ports according to the precoding vector and modulation symbols, wherein the modulation symbols are symbols obtained by mapping a first sequence subjected to constellation modulation onto resource elements; and
a transceiver module, configured to send a sensing reference signal according to a transmit signal vector after cyclic-shift precoding.

According to a fourth aspect of the embodiments of the present disclosure, a receiver is provided, including:
a transceiver module, configured to receive a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

According to a fifth aspect of the embodiments of the present disclosure, a sensing apparatus is provided, including:
one or more processors; wherein the sensing apparatus is configured to perform the sensing method provided in the first aspect of the embodiments of the present disclosure.

According to a sixth aspect of the embodiments of the present disclosure, a sensing apparatus is provided, including:
one or more processors; wherein the sensing apparatus is configured to perform the sensing method provided in the second aspect of the embodiments of the present disclosure.

According to a seventh aspect of the embodiments of the present disclosure, a sensing system is provided, including:
a transmitter, configured to perform the sensing method provided in the first aspect of the embodiments of the present disclosure; and
a receiver, configured to perform the sensing method provided in the second aspect of the embodiments of the present disclosure.

According to an eighth aspect of the embodiments of the present disclosure, a storage medium is provided, wherein the storage medium stores instructions, and when the instructions are run on a communication device, the communication device is caused to perform the sensing method provided in the first aspect of the embodiments of the present disclosure or the sensing method provided in the second aspect of the embodiments of the present disclosure.

In the embodiments of the present disclosure, different ports of a sensing reference signal may occupy the same time-frequency resource. According to the precoding vector for cyclic shift and the modulation symbols mapped onto resource elements, cyclic shifts are performed on different ports of the sensing reference signal, so that sensing reference signals of different ports can be simultaneously transmitted on the same time-frequency resource with different beams, multi-beam simultaneous scanning can be supported, and low time-frequency resource overhead can be maintained.

### BRIEF DESCRIPTION OF THE DRAWINGS

In order to describe the technical solutions in the embodiments of the present disclosure more clearly, the accompanying drawings required for describing the embodiments are introduced below. The following accompanying drawings are merely some embodiments of the present disclosure, and do not specifically limit the protection scope of the present disclosure.
FIG. 1 is an exemplary schematic diagram of an architecture of a sensing system provided according to embodiments of the present disclosure.
FIG. 2 is an exemplary interaction schematic diagram of a sensing method provided according to embodiments of the present disclosure.
FIG. 3A is an exemplary schematic diagram of a sensing method provided according to embodiments of the present disclosure.
FIG. 3B is an exemplary schematic diagram of a sensing method provided according to embodiments of the present disclosure.
FIG. 3C is an exemplary schematic diagram of a sensing method provided according to embodiments of the present disclosure.
FIG. 4A is an exemplary schematic diagram of a sensing method provided according to embodiments of the present disclosure.
FIG. 4B is an exemplary schematic diagram of a sensing method provided according to embodiments of the present disclosure.
FIG. 5A is an exemplary schematic diagram of a structure of a transmitter provided according to embodiments of the present disclosure.
FIG. 5B is an exemplary schematic diagram of a structure of a receiver provided according to embodiments of the present disclosure.
FIG. 6A is an exemplary schematic diagram of a structure of a communication device provided according to embodiments of the present disclosure.
FIG. 6B is an exemplary schematic diagram of a structure of a chip provided according to embodiments of the present disclosure.

### DETAILED DESCRIPTION

Embodiments of the present disclosure provide a sensing method, an apparatus, and a sensing system.

In a first aspect, embodiments of the present disclosure provide a sensing method, executed by a transmitter, the method including:
determining a precoding vector for cyclic shift, wherein the precoding vector includes cyclic shift information of a plurality of sensing reference signal ports;
performing cyclic-shift precoding of the plurality of sensing reference signal ports according to the precoding vector and modulation symbols, wherein the modulation symbols are symbols obtained by mapping a first sequence subjected to constellation modulation onto resource elements; and
sending a sensing reference signal according to a transmit signal vector after cyclic-shift precoding.

In the above embodiments, different ports of the sensing reference signal may occupy the same time-frequency resources, wherein each port of the sensing reference signal may be referred to as a sensing reference signal port. According to the precoding vector for cyclic shift and the modulation symbols mapped onto resource elements, cyclic shift is performed on different ports of the sensing reference signal, such that a plurality of ports of the sensing reference signal can be multiplexed, and therefore sensing reference signals of different ports can be simultaneously sent on the same time-frequency resources by using different beams. On the one hand, multi-beam simultaneous scanning is supported; and on the other hand, relatively low time-frequency resource overhead can be maintained. For example, according to symbols of each sensing reference signal port after cyclic-shift precoding, a transmit signal vector on each resource element on which the sensing reference signal is located may be determined, and the transmit signal vector may also be referred to as a sensing reference signal vector, wherein the transmit signal vector is a *N*_{Tx}-dimensional vector, respectively corresponding to *N*Tₓ transmitting antennas or antenna ports for sending the sensing reference signal. Taking one resource element as an example, according to the transmit signal vector of the sensing reference signal on the resource element, a multi-port sensing reference signal is sent on the resource element through *N*_{Tx} transmitting antennas (or antenna ports).

In combination with some embodiments of the first aspect, in some embodiments, the transmit signal vector satisfies: $x \left(k, l\right) = {β}_{sensingRS} ⋅ W ⋅ {w}_{cdd} \left(k\right) ⋅ r \left(k, l\right) ;$
wherein (*k*, *l*) denotes the resource element located on an orthogonal frequency division multiplexing (OFDM) symbol numbered *l* and an OFDM subcarrier numbered *k*, *x*(*k*, *l*) denotes the transmit signal vector of the sensing reference signal on the resource element (*k*, *l*), *β*_{sensingRS} denotes a power scaling factor, denotes a spatial precoding matrix, *x*(*k*, *l*) denotes the precoding vector acting on the OFDM subcarrier numbered *k*, and *r*(*k*, *l*) denotes the modulation symbol mapped onto the resource element (*k, l*).

In the above embodiments, taking one resource element (*k*, *l*) as an example, in order to determine the transmit signal vector on the resource element (*k*, *l*) , cyclic-shift precoding is performed at least according to the precoding vector w_{cdd}(*k*) and the modulation symbol *r*(*k*, *l*) , and space-based precoding is further performed according to the spatial precoding matrix W, so as to achieve signal spatial shaping. In addition, power scaling is further performed based on the power scaling factor *β*_{sensingRS}, so that the transmission power of the sensing reference signal satisfies constraint conditions.

In combination with some embodiments of the first aspect, in some embodiments, the precoding vector satisfies one of the following: ${w}_{cdd} \left(k\right) = {\left[{e}^{- j 2 {πα}_{cs}^{\left({m}_{0}\right)} k} {e}^{- j 2 {πα}_{cs}^{\left({m}_{1}\right)} k} ⋯ {e}^{- j 2 {πα}_{cs}^{\left({m}_{i}\right)} k} ⋯ {e}^{- j 2 {πα}_{cs}^{\left({m}_{\left|M\right| - 1}\right)} k}\right]}^{T} ;$ ${w}_{cdd} \left(k\right) = {\left[{e}^{- j \frac{2 π}{{N}_{FFT}} {n}_{cs}^{\left({m}_{0}\right)} k} {e}^{- j \frac{2 π}{{N}_{FFT}} {n}_{cs}^{\left({m}_{1}\right)} k} ⋯ {e}^{- j \frac{2 π}{{N}_{FFT}} {n}_{cs}^{\left({m}_{i}\right)} k} ⋯ {e}^{- j \frac{2 π}{{N}_{FFT}} {n}_{cs}^{\left({m}_{\left|M\right| - 1}\right)} k}\right]}^{T} ;$
wherein *x*(*k*, *l*) denotes the precoding vector acting on the OFDM subcarrier numbered *k*, *e* is a natural constant, *j* is an imaginary unit, ${α}_{cs}^{\left({m}_{i}\right)}$ denotes a cyclic shift ratio of a sensing reference signal port *mᵢ*, ${n}_{cs}^{\left({m}_{i}\right)}$ denotes a cyclic shift value of a sensing reference signal port *mᵢ*, | 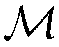 | denotes the number of ports of the sensing reference signal, and *N*_{FFT} is a fast Fourier transform (FFT) point number.

In the above embodiments, the precoding vector w_{cdd}(*k*) for cyclic shift includes cyclic shift information of each sensing reference signal port. In some optional implementations, the cyclic shift information of each sensing reference signal port may include a cyclic shift ratio of the sensing reference signal port, and the cyclic shift ratio indicates a ratio between an offset value of the sensing reference signal port in a delay domain and an OFDM symbol length. In some optional implementations, the cyclic shift information of each sensing reference signal port may include a cyclic shift value of the sensing reference signal port, and the cyclic shift value indicates an offset value of the sensing reference signal port in the delay domain.

In combination with some embodiments of the first aspect, in some embodiments, the method further includes:
sending parameter information to a receiver, wherein the parameter information is used by the receiver to determine the cyclic shift information of the plurality of sensing reference signal ports.

In the above embodiments, the transmitter notifies the receiver of the parameter information, so as to facilitate the receiver to determine, according to the parameter information, the cyclic shift information of each port of the sensing reference signal, and accordingly measure a sensing quantity of each port of the sensing reference signal.

In combination with some embodiments of the first aspect, in some embodiments, the parameter information includes at least one of the following:
a cyclic shift ratio of one sensing reference signal port among the plurality of sensing reference signal ports; and
a cyclic shift value of one sensing reference signal port among the plurality of sensing reference signal ports.

In the above embodiments, the transmitter may notify the receiver of a cyclic shift ratio or a cyclic shift value of at least one sensing reference signal port.

In a second aspect, embodiments of the present disclosure provide a sensing method, executed by a receiver, the method including:
receiving a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

In combination with some embodiments of the second aspect, in some embodiments, the method further includes:
receiving parameter information;
determining the cyclic shift information of the plurality of sensing reference signal ports according to the parameter information; and
measuring, according to the sensing reference signal and the cyclic shift information of each sensing reference signal port, a sensing quantity of each sensing reference signal port.

In combination with some embodiments of the second aspect, in some embodiments, the parameter information includes at least one of the following:
a cyclic shift ratio of one sensing reference signal port among the plurality of sensing reference signal ports; and
a cyclic shift value of one sensing reference signal port among the plurality of sensing reference signal ports.

In a third aspect, embodiments of the present disclosure provide a transmitter, including:
a processing module, configured to determine a precoding vector for cyclic shift, wherein the precoding vector includes cyclic shift information of a plurality of sensing reference signal ports, and configured to perform cyclic-shift precoding of the plurality of sensing reference signal ports according to the precoding vector and modulation symbols, wherein the modulation symbols are symbols obtained by mapping a first sequence subjected to constellation modulation onto resource elements; and
a transceiver module, configured to send a sensing reference signal according to a transmit signal vector after cyclic-shift precoding.

In a fourth aspect, embodiments of the present disclosure provide a receiver, including:
a transceiver module, configured to receive a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

In a fifth aspect, embodiments of the present disclosure provide a sensing apparatus, including: one or more processors; wherein the sensing apparatus is used to execute the method described in the first aspect of embodiments of the present disclosure or an optional implementation of the first aspect.

In a sixth aspect, embodiments of the present disclosure provide a sensing apparatus, including: one or more processors; wherein the sensing apparatus is used to execute the method described in the second aspect of embodiments of the present disclosure or an optional implementation of the second aspect.

In a seventh aspect, embodiments of the present disclosure provide a sensing system, including: a transmitter, configured to execute the method described in the first aspect of embodiments of the present disclosure or an optional implementation of the first aspect; and a receiver, configured to execute the method described in the second aspect of embodiments of the present disclosure or an optional implementation of the second aspect.

In an eighth aspect, embodiments of the present disclosure provide a storage medium, wherein the storage medium stores instructions, and when the instructions are run on a communication device, the communication device is caused to execute the method described in the first aspect of embodiments of the present disclosure or an optional implementation of the first aspect, or the method described in the second aspect or an optional implementation of the second aspect.

In a ninth aspect, embodiments of the present disclosure provide a program product, and when the program product is executed by a communication device, the communication device is caused to execute the method described in the first aspect of embodiments of the present disclosure or an optional implementation of the first aspect, or the method described in the second aspect or an optional implementation of the second aspect.

In a tenth aspect, embodiments of the present disclosure provide a computer program, and when the computer program is run on a computer, the computer is caused to execute the method described in the first aspect of embodiments of the present disclosure or an optional implementation of the first aspect, or the method described in the second aspect or an optional implementation of the second aspect.

In an eleventh aspect, embodiments of the present disclosure provide a chip or chip system. The chip or chip system includes a processing circuit, configured to execute the method described in the first aspect of embodiments of the present disclosure or an optional implementation of the first aspect, or the method described in the second aspect or an optional implementation of the second aspect.

It can be understood that the above transmitter, receiver, sensing apparatus, sensing system, storage medium, program product, computer program, chip, or chip system are all used to execute the method proposed in embodiments of the present disclosure. Therefore, beneficial effects that can be achieved thereby may refer to the beneficial effects in the corresponding method, and details are not described herein again.

The embodiments of the present disclosure provide a sensing method, a sensing apparatus, and a sensing system. In some embodiments, the transmitter may include a sensing transmitter, and the receiver may include a sensing receiver.

The embodiments of the present disclosure are not exhaustive, and are merely illustrations of some embodiments, and are not used as specific limitations on the protection scope of the present disclosure. In the absence of contradiction, each step in one embodiment may be implemented as an independent embodiment, and the steps may be combined in any manner. For example, in one embodiment, a solution obtained by removing some steps may also be implemented as an independent embodiment, and in one embodiment, the order of the steps may be exchanged in any manner. In addition, optional implementations in one embodiment may be combined in any manner; furthermore, the embodiments may be combined in any manner. For example, some or all of the steps of different embodiments may be combined in any manner, and one embodiment may be combined with optional implementations of other embodiments in any manner.

In the embodiments of the present disclosure, if there is no special description and no logical conflict, the terms and/or descriptions among the embodiments are consistent and may refer to each other, and the technical features in different embodiments may be combined according to their intrinsic logical relationships to form new embodiments.

The terms used in the embodiments of the present disclosure are merely for the purpose of describing specific embodiments, and are not used as limitations on the present disclosure.

In the embodiments of the present disclosure, unless otherwise specified, elements expressed in the singular form, such as "one", "a", "the", "above", "the said", "the aforementioned", "this", and the like, may represent "one and only one", and may also represent "one or more", "at least one", and the like. For example, in the case where articles such as "a", "an", and "the" in English are used in translation, the noun following the article may be understood as a singular expression form, and may also be understood as a plural expression form.

In the embodiments of the present disclosure, "a plurality of" means two or more.

In some embodiments, terms such as "at least one of", "one or more", "a plurality of", and "multiple" may be substituted for each other.

In some embodiments, expression manners such as "at least one of A and B", "A and/or B", "A in one case and B in another case", and "in response to one case A and in response to another case B" may, depending on the situation, include the following technical solutions: in some embodiments, A (A is performed irrespective of B); in some embodiments, B (B is performed irrespective of A); in some embodiments, selected execution from A and B (A and B are selectively performed); and in some embodiments, A and B (both A and B are performed). The same applies when there are more branches such as A, B, and C.

In some embodiments, expression manners such as "A or B" may, depending on the situation, include the following technical solutions: in some embodiments, A (A is performed irrespective of B); in some embodiments, B (B is performed irrespective of A); and in some embodiments, selected execution from A and B (A and B are selectively performed). The same applies when there are more branches such as A, B, and C.

The prefix words such as "first" and "second" in the embodiments of the present disclosure are merely for distinguishing different objects of description, and do not constitute limitations on the positions, order, priority, quantity, or content of the objects of description. For statements regarding the objects of description, reference may be made to the claims or to the contextual descriptions in the embodiments, and the use of prefix words should not constitute redundant limitations. For example, if the object of description is a "field", then the ordinal words before "field" in "a first field" and "a second field" do not limit the positions or order between the "fields", and "first" and "second" do not limit whether the "fields" modified thereby are in the same message, nor do they limit the sequence of "the first field" and "the second field". As another example, if the object of description is a "level", then the ordinal words before "level" in "a first level" and "a second level" do not limit the priority between the "levels". As another example, the quantity of the objects of description is not limited by the ordinal words, and may be one or more. Taking "a first apparatus" as an example, the quantity of "apparatus" may be one or more. In addition, objects modified by different prefix words may be the same or different. For example, if the object of description is an "apparatus", then "the first apparatus" and "the second apparatus" may be the same apparatus or different apparatuses, and their types may be the same or different. As another example, if the object of description is "information", then "first information" and "second information" may be the same information or different information, and their content may be the same or different.

In some embodiments, "includes A", "contains A", "used to indicate A", and "carries A" may be interpreted as directly carrying A, and may also be interpreted as indirectly indicating A.

In some embodiments, terms such as "in response to", "in response to determining", "in a case that", "when", "at the time of", "if", and "in the event that" may be substituted for each other.

In some embodiments, terms such as "greater than", "greater than or equal to", "not less than", "more than", "more than or equal to", "no less than", "higher than", "higher than or equal to", "not lower than", and "above" may be substituted for each other, and terms such as "less than", "less than or equal to", "not greater than", "fewer than", "fewer than or equal to", "not more than", "lower than", "lower than or equal to", "not higher than", and "below" may be substituted for each other.

In some embodiments, an apparatus and a device may be interpreted as physical, and may also be interpreted as virtual. Their names are not limited to the names recorded in the embodiments, and in some cases may also be understood as "equipment", "device", "circuit", "network element", "node", "function", "unit", "section", "system", "network", "chip", "chip system", "entity", "body", and the like.

In some embodiments, a "network" may be interpreted as an apparatus included in the network, for example, an access network device, a core network device, and the like.

In some embodiments, an "access network device (AN device)" may also be referred to as a "radio access network device (RAN device)", a "base station (BS)", a "radio base station", a "fixed station", and in some embodiments may also be understood as a "node", an "access point", a "transmission point (TP)", a "reception point (RP)", a "transmission and/or reception point (TRP)", a "panel", an "antenna panel", an "antenna array", a "cell", a "macro cell", a "small cell", a "femto cell", a "pico cell", a "sector", a "cell group", a "serving cell", a "carrier", a "component carrier", a "bandwidth part (BWP)", and the like.

In some embodiments, a "terminal" or a "terminal device" may be referred to as a "user equipment (UE)", a "user terminal", a "mobile station (MS)", a "mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and the like.

In some embodiments, data, information, and the like may be obtained in compliance with the laws and regulations of the country where located.

In some embodiments, data, information, and the like may be obtained after user consent is obtained.

In addition, each element, each row, or each column in the tables of the embodiments of the present disclosure may be implemented as an independent embodiment, and a combination of any elements, any rows, and any columns may also be implemented as an independent embodiment.

Wireless communication and wireless sensing are highly similar. Integrated sensing and communication (ISAC) can combine wireless communication and wireless sensing together, introduce close cooperation between the two, so that both wireless communication and wireless sensing can benefit, thereby not only improving the effectiveness and reliability of wireless communication, but also improving the precision of wireless sensing. Moreover, a device supporting both wireless communication and wireless sensing can reduce network deployment costs.

In wireless sensing, it is usually necessary to estimate the distance, orientation angle (such as a horizontal direction angle and a vertical direction angle), and speed of a sensing target. Broadly, sensing further includes wireless tracking and radio frequency identification of the sensing target. In order to realize high-precision sensing, the transmitter usually sends a dedicated reference signal for sensing. For ease of description, the reference signal is referred to as a sensing reference signal below. Optionally, the sensing reference signal may not carry information or data for communication. In some embodiments, the sensing reference signal may be alternatively described as a sensing signal.

It can be understood that wireless sensing may include a plurality of sensing scenarios, for example, including sensing between terminals, sensing between a terminal and a network device, sensing between network devices, and the like.

In some embodiments, in a monostatic mode, the transmitter may send a sensing reference signal, and by measuring an echo of the sensing reference signal, estimate at least one of a distance, an angle, and a speed of a sensing target.

In some embodiments, in a bistatic mode, the transmitter may send a sensing reference signal, and the receiver receives the sensing reference signal and measures the sensing reference signal, thereby estimating at least one of a distance, an angle, and a speed of a sensing target.

In the monostatic mode, the transmitter and the receiver may be located in a same device, for example, located in a same terminal or located in a same network device. In the bistatic mode, the transmitter and the receiver may be respectively located in different devices, for example, the transmitter is located in a terminal and the receiver is located in another terminal, for example, the transmitter is located in a terminal and the receiver is located in a network device, for example, the transmitter is located in a network device and the receiver is located in another network device, for example, the transmitter is located in a network device and the receiver is located in a terminal.

Taking estimating the distance of a sensing target as an example, the receiver needs to accurately estimate an arrival time of a first echo path reflected by the sensing target (monostatic mode), or a first path scattered by the sensing target (bistatic mode). In order to ensure the precision of distance sensing, interference received by the receiver when measuring the sensing reference signal should be avoided as much as possible.

In high frequency bands such as millimeter wave (millimeter wave, mmWave), sub-tera Hertz (subThz), and tera Hertz (THz), propagation loss is exceptionally severe. In this case, sensing must be completed with the aid of beamforming. Otherwise, severe highfrequency transmission loss will greatly reduce the precision and performance of sensing.

In a case of using beamforming, high-precision sensing is limited only to sensing of a target within a beam coverage range or in an area near the beam. For a target outside the beam coverage range or far away from the beam area, the sensing precision is low, and the sensing performance cannot be guaranteed. Therefore, the transmitter needs to perform beam sweeping to complete sensing of surrounding targets. In order to quickly complete sensing of surrounding targets, the transmitter may simultaneously transmit a plurality of beams pointing to different directions to perform beam sweeping in parallel. In other words, the transmitter needs to send sensing reference signals of a plurality of ports. For ease of description, each port of the sensing reference signal is referred to as a sensing reference signal port below.

As an implementation, time division multiplexing (TDM) may be used to multiplex a plurality of sensing reference signal ports, that is, the transmitter sends sensing reference signals of different ports with different beams on different time-domain resource units (for example, OFDM symbols, slots, and the like). Since, in the TDM manner, different sensing reference signal ports occupy different time-domain resource units, overhead of the sensing reference signal is relatively large. Moreover, since the sensing reference signals of different ports are sent successively at different times, an entire sensing process is actually serial rather than parallel, thereby requiring a relatively long time to complete sensing of surrounding targets.

As an implementation, frequency division multiplexing (FDM) may be used to multiplex a plurality of sensing reference signal ports, that is, the transmitter simultaneously sends sensing reference signals of a plurality of different ports with different beams on different frequency-domain resource units (for example, OFDM subcarriers, physical resource blocks (PRB), subbands, and component carriers). Since, in the FDM manner, different sensing reference signal ports occupy different frequency resources, this likewise causes a problem of relatively large sensing reference signal overhead.

As an implementation, code division multiplexing (CDM) may be used to multiplex a plurality of sensing reference signal ports, that is, the transmitter simultaneously sends sensing reference signals of different ports with different beams on a same time-frequency resource. A bottleneck of the CDM manner lies in interference between the sensing reference signals of different ports. If the interference between the sensing reference signals of different ports is relatively large, the precision of sensing will inevitably be reduced.

In order to reduce interference between different ports, orthogonal CDM codewords may be selected to multiplex different sensing reference signal ports, such as an orthogonal cover code (OCC). Optionally, OCC may be used in a time domain (TD) or a frequency domain (FD), that is, TD-OCC or FD-OCC.

However, the cost of using OCC to multiplex different ports of a sensing reference signal is occupation of more time-frequency resources. Moreover, the occupied time-frequency resources are proportional to the number of multiplexed sensing reference signal ports.

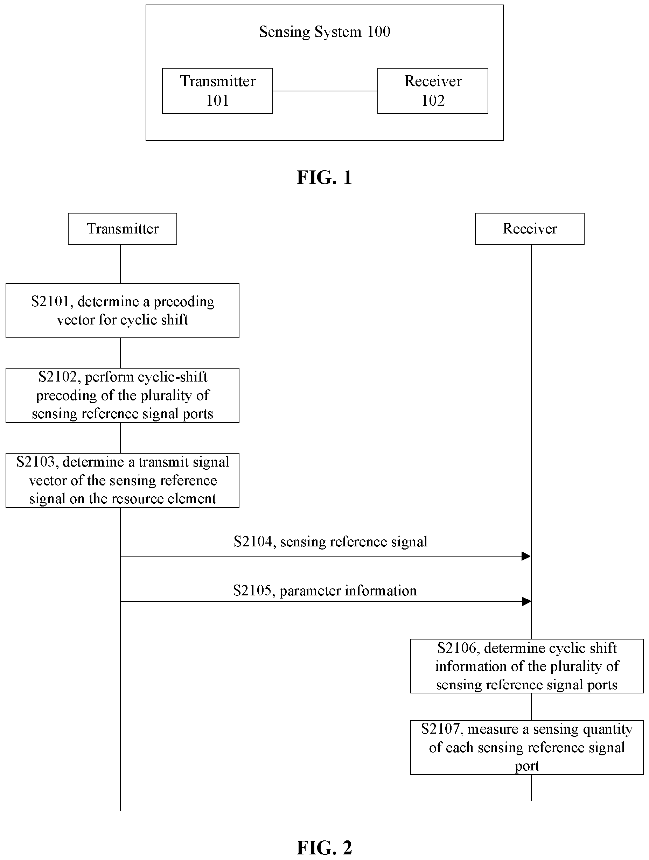

FIG. 1 is a schematic diagram of a sensing system according to embodiments of the present disclosure. As shown in FIG. 1, the sensing system 100 may include a transmitter 101 and a receiver 102. In some embodiments, the transmitter 101 includes a sensing transmitter. In some embodiments, the receiver 102 includes a sensing receiver.

It should be noted that the number of the transmitter 101 and the number of the receiver 102 shown in FIG. 1 are merely examples and do not constitute a limitation on embodiments of the present disclosure. In an actual case, the transmitter 101 may be one or more transmitters, and the receiver 102 may also be one or more receivers.

In some embodiments, the transmitter 101 may be located in a terminal or a network device.

In some embodiments, the receiver 102 may be located in a terminal or a network device.

In some embodiments, the transmitter 101 and the receiver 102 may be located in a same device, for example, the transmitter 101 and the receiver 102 are located in a same terminal or located in a same network device.

In some embodiments, the transmitter 101 and the receiver 102 may be respectively located in different devices, for example, the transmitter 101 is located in a terminal, and the receiver 102 is located in another terminal; for example, the transmitter 101 is located in a terminal, and the receiver 102 is located in a network device; for example, the transmitter 101 is located in a network device, and the receiver 102 is located in another network device; for example, the transmitter 101 is located in a network device, and the receiver 102 is located in a terminal.

In some embodiments, the terminal may include at least one of a mobile phone, a wearable device, an Internet of Things device, an automobile having a sensing function, a smart automobile, a tablet computer (Pad), a computer having a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the network device is, for example, an access network device. The access network device may include at least one of an evolved NodeB (eNB) in a 5G communication system, a next generation evolved NodeB (next generation eNB, ng-eNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, and an access node in a Wi-Fi system, but is not limited thereto.

FIG. 2 is an interaction schematic diagram of a sensing method shown according to an embodiment of the present disclosure. As shown in FIG. 2, an embodiment of the present disclosure relates to a sensing method, and the sensing method includes:

Step S2101, a transmitter determines a precoding vector for cyclic shift.

In some embodiments, the precoding vector for cyclic shift includes cyclic shift information of a plurality of sensing reference signal ports, and cyclic-shift precoding may be performed on the plurality of sensing reference signal ports according to the precoding vector.

In some embodiments, the name of the precoding vector for cyclic shift is not limited in the embodiments of the present disclosure, and is, for example, a "first precoding vector," a "first vector," a "cyclic delay diversity (CDD) precoding vector," a "frequency-selective precoding vector," and the like.

In some embodiments, the cyclic shift information of each sensing reference signal port includes a cyclic shift value of the corresponding port. The cyclic shift value indicates an offset value of the sensing reference signal port in a delay domain. Optionally, the cyclic shift value of one sensing reference signal port indicates an offset value of the port in the delay domain relative to a timing zero point.

In some embodiments, the cyclic shift information of each sensing reference signal port includes a cyclic shift ratio of the corresponding port. The cyclic shift ratio indicates a ratio between an offset value of the sensing reference signal port in the delay domain and an OFDM symbol length. Optionally, the cyclic shift ratio of one sensing reference signal port indicates a ratio between an offset value of the port in the delay domain relative to a timing zero point and the OFDM symbol length.

In some embodiments, the precoding vector for cyclic shift satisfies one of the following: ${w}_{cdd} \left(k\right) = {\left[{e}^{- j 2 {πα}_{cs}^{\left({m}_{0}\right)} k} {e}^{- j 2 {πα}_{cs}^{\left({m}_{1}\right)} k} ⋯ {e}^{- j 2 {πα}_{cs}^{\left({m}_{i}\right)} k} ⋯ {e}^{- j 2 {πα}_{cs}^{\left({m}_{\left|M\right| - 1}\right)} k}\right]}^{T} ;$ ${w}_{cdd} \left(k\right) = {\left[{e}^{- j \frac{2 π}{{N}_{FFT}} {n}_{cs}^{\left({m}_{0}\right)} k} {e}^{- j \frac{2 π}{{N}_{FFT}} {n}_{cs}^{\left({m}_{1}\right)} k} ⋯ {e}^{- j \frac{2 π}{{N}_{FFT}} {n}_{cs}^{\left({m}_{i}\right)} k} ⋯ {e}^{- j \frac{2 π}{{N}_{FFT}} {n}_{cs}^{\left({m}_{\left|M\right| - 1}\right)} k}\right]}^{T} ;$
wherein, ${w}_{cdd} \left(k\right) ∈ {ℂ}^{\left|M\right| \times 1}$ is a precoding vector for cyclic shift acting on an OFDM subcarrier numbered *k*, *e* is a natural constant, *j* is an imaginary unit, ${α}_{cs}^{\left({m}_{i}\right)}$ is a cyclic shift ratio of a sensing reference signal port *mᵢ*, and ${n}_{cs}^{\left({m}_{i}\right)}$ is a cyclic shift value of a sensing reference signal port *mᵢ. mᵢ ∈* 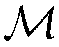 *,* 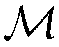 = {*m*₀, *m*₁,..., *mᵢ*, ...} is a set of port indexes of sensing reference signals, and | 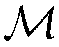 | is the number of ports of the sensing reference signals, for example, | 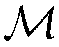 | is the number of elements in the port coding set 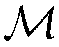 . *N*_{FFT} is the number of FFT points, and optionally, *N*_{FFT} is the number of FFT points for the sensing reference signal.

In the precoding vector in the above example, taking a sensing reference signal port *mᵢ* as an example, ${e}^{- j 2 {πα}_{cs}^{\left({m}_{i}\right)} k}$ indicates cyclic shift information of the sensing reference signal port *mᵢ*.

In the precoding vector in the above example, taking a sensing reference signal port *mᵢ* as an example, ${e}^{- j \frac{2 π}{{N}_{FFT}} {n}_{cs}^{\left({m}_{i}\right)} k}$ indicates cyclic shift information of the sensing reference signal port *mᵢ*.

In some embodiments, ${α}_{cs}^{\left({m}_{i}\right)}$ may have a value taken in a first set. For example, ${α}_{cs}^{\left({m}_{i}\right)} ∈ \left\{0, \frac{1}{2}, \frac{1}{4}, \frac{3}{4}\right\}$.

In some embodiments, cyclic shift ratios of different sensing reference signal ports may be different. Optionally, in a case that the number of ports of the sensing reference signal is less than or equal to the number of elements in the first set, the cyclic shift ratio of each sensing reference signal port is different.

In some embodiments, cyclic shift ratios of different sensing reference signal ports may be the same. Optionally, in a case that the number of ports of the sensing reference signal is greater than the number of elements in the first set, cyclic shift ratios of some sensing reference signal ports are the same. For example, when two sensing reference signal ports have relatively good isolation in a spatial domain (that is, an angular domain) (mutual interference is negligible), multiplexing of the cyclic shift ratio may be considered. This is because, once two sensing reference signal ports adopt exactly the same cyclic shift ratio, this means that the two ports completely overlap in the delay domain, and can only be distinguished by means of the spatial domain (for example, different columns corresponding to the spatial precoding matrix in the following text). If spatial-domain isolation is poor, mutual interference between the two ports will be relatively great, resulting in a substantial reduction in sensing performance.

In some embodiments, ${n}_{cs}^{\left({m}_{i}\right)}$ may have a value taken in a second set. For example, ${n}_{cs}^{\left({m}_{i}\right)} ∈ \left\{0, \frac{{N}_{FFT}}{2}, \frac{{N}_{FFT}}{4}, \frac{3 {N}_{FFT}}{4}\right\}$.

In some embodiments, cyclic shift values of different sensing reference signal ports may be different. Optionally, in a case that the number of ports of the sensing reference signal is less than or equal to the number of elements in the second set, the cyclic shift value of each sensing reference signal port is different.

In some embodiments, cyclic shift values of different sensing reference signal ports may be the same. Optionally, in a case that the number of ports of the sensing reference signal is greater than the number of elements in the first set, cyclic shift values of some sensing reference signal ports are the same. For example, when two sensing reference signal ports have relatively good isolation in a spatial domain (that is, an angular domain) (mutual interference is negligible), multiplexing of the cyclic shift value may be considered.

In the above embodiments, because cyclic shift ratios or cyclic shift values of different sensing reference signal ports are different, or cyclic shift ratios or cyclic shift values of some of the sensing reference signal ports are the same, after cyclic-shift precoding is performed on the plurality of sensing reference signal ports, a plurality of ports of the sensing reference signal can be multiplexed, and interference between sensing reference signals of different ports can be avoided.

In some embodiments, the name of the first set is not limited in the embodiments of the present disclosure, and is, for example, a "cyclic shift set," a "cyclic shift ratio set," and the like. In some embodiments, the name of the second set is not limited in the embodiments of the present disclosure, and is, for example, a "cyclic shift set," a "cyclic shift value set," and the like.

Step S2102, the transmitter performs cyclic-shift precoding of the plurality of sensing reference signal ports.

In some embodiments, the transmitter performs cyclic-shift precoding of the plurality of sensing reference signal ports according to the precoding vector for cyclic shift and modulation symbols. Optionally, the modulation symbols are symbols obtained by mapping a first sequence onto resource elements after constellation modulation (for example, constellation modulation such as quadrature phase shift keying (QPSK)). Optionally, the first sequence may be a root sequence of the sensing reference signal.

In some embodiments, taking one resource element (*k*, *l*) on which the sensing reference signal is located as an example, the resource element (*k*, *l*) is located on an OFDM symbol numbered *l* and an OFDM subcarrier numbered *k* on a time-frequency resource grid, and cyclic-shift precoding of the plurality of sensing reference signal ports is performed according to a precoding vector w_{cdd}(*k*) for cyclic shift acting on the OFDM subcarrier numbered *k* and modulation symbols *r*(*k*, *l*) obtained by mapping a first sequence (such as a root sequence of the sensing reference signal) onto the resource element (*k*, *l*) after constellation modulation. w_{cdd}(*k*) includes cyclic shift information of the plurality of sensing reference signal ports.

In some embodiments, cyclic-shift precoding includes multiplying the precoding vector for cyclic shift by modulation symbols to be transmitted on the resource element. Taking one resource element (*k*, *l*) on which the sensing reference signal is located as an example, cyclic-shift precoding includes multiplying the precoding vector w_{cdd}(*k*) for cyclic shift acting on the OFDM subcarrier numbered *k* by modulation symbols *r*(*k*, *l*) to be transmitted on the resource element (*k*, *l*).

Step S2103, the transmitter determines a transmit signal vector of the sensing reference signal on the resource element.

In some embodiments, the transmitter determines the transmit signal vector of the sensing reference signal on the resource element according to symbols of the plurality of sensing reference signal ports after cyclic-shift precoding.

In some embodiments, the transmit signal vector is a complex transmit signal vector of *N*_{Tx}-dimension.

In some embodiments, the name of the transmit signal vector is not limited in the embodiments of the present disclosure, and is, for example, a "sensing reference signal vector," a "second vector," and the like.

In some embodiments, taking one resource element (*k*, *l*) on which the sensing reference signal is located as an example, the transmit signal vector of the sensing reference signal on the resource element (*k*, *l*) satisfies: $x \left(k, l\right) = {β}_{sensingRS} ⋅ W ⋅ {w}_{cdd} \left(k\right) ⋅ r \left(k, l\right) ;$
wherein:
(*k*, *l*) indicates one resource element on which the sensing reference signal is located, and the resource element is located on an OFDM symbol numbered *l* and an OFDM subcarrier numbered *k* on a time-frequency resource grid;
$x \left(k, l\right) ∈ {ℂ}^{{N}_{Tx} \times 1}$ is a transmit signal vector of the sensing reference signal on the resource element (*k*, *l*), wherein x(*k*, *l*) is a complex transmit signal vector of *N*_{Tx}-dimension, w_{cdd}(*k*) includes *N*_{Tx} elements, respectively corresponding to *N*_{Tx} transmission antennas (or antenna ports) used by the transmitter to send the sensing reference signal;
*β*_{sensingRS} is a power scaling factor, configured to enable transmit power of the sensing reference signal to satisfy constraint conditions, for example, satisfying a total transmit power constraint, a transmit power constraint of each antenna port, and the like;
$W = \left[{w}^{\left({m}_{0}\right)} {w}^{\left({m}_{1}\right)} ⋯ {w}^{\left({m}_{i}\right)} ⋯ {w}^{\left({m}_{\left|M\right| - 1}\right)}\right] ∈ {ℂ}^{{N}_{Tx} \times \left|M\right|}$ is a spatial precoding matrix, w^{(*mi*)} is a precoding vector of a sensing reference signal port *mᵢ*, *mᵢ* ∈ 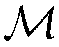 , 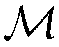 = {*m*₀, *m*₁, . . . , *mᵢ,* . . .*}* is a set of port indexes of sensing reference signals, and | 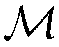 | is the number of ports of the sensing reference signal. In some embodiments, the name of the precoding vector included in the spatial precoding matrix is not limited in the embodiments of the present disclosure, and is, for example, a "second precoding vector," a "spatial precoding vector," a "third vector," and the like;
${w}_{cdd} \left(k\right) ∈ {ℂ}^{\left|M\right| \times 1}$ is a precoding vector for cyclic shift acting on an OFDM subcarrier numbered *k* (including a sensing reference signal resource element on the OFDM subcarrier numbered *k*);
*r*(*k*, *l*) is a modulation symbol obtained by mapping a first sequence onto the resource element (*k*, *l*) after constellation modulation (for example, constellation modulation such as QPSK). In some embodiments, the first sequence may be a root sequence of the sensing reference signal.

It may be understood that the above formula is merely used as an example description of the transmit signal vector, and does not constitute a limitation on the transmit signal vector. For example, in some embodiments, some parameters in the above formula (for example, the power scaling factor *β*_{sensingRS} ) may be omitted. For example, in some embodiments, other parameters may be introduced into the above formula.

Step S2104: The transmitter sends a sensing reference signal.

In some embodiments, the transmitter sends the sensing reference signal according to the transmit signal vector. Optionally, the above sensing reference signal is a multi-port sensing reference signal.

In some embodiments, taking one resource element (*k*, *l*) on which the sensing reference signal is located as an example, a transmit signal vector x(*k*, *l*) of the sensing reference signal (*k*, *l*) on the resource element is a *N*_{Tx}-dimensional complex-valued transmit signal vector. It can be understood that the w_{cdd}(*k*) includes *N*_{Tx} elements, which respectively correspond to *N*_{Tx} transmission antennas (or antenna ports) used by the transmitter for sending the sensing reference signal. The multi-port sensing reference signal is sent on the resource element (*k*, *l*) through the *N*_{Tx} transmission antennas (or antenna ports).

In some embodiments, the receiver receives the sensing reference signal.

Step S2105: The transmitter sends parameter information.

In some embodiments, the parameter information is used by the receiver to determine cyclic shift information of the plurality of sensing reference signal ports.

In some embodiments, the parameter information includes at least one of the following:
a set of port indexes of the sensing reference signal: 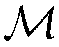 ;
a number of ports of the sensing reference signal: | 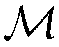 |;
a cyclic shift ratio of at least one sensing reference signal port: ${α}_{cs}^{\left({m}_{i}\right)}$, *mᵢ* ∈ 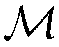 ; and
a cyclic shift value of at least one sensing reference signal port: ${n}_{cs}^{\left({m}_{i}\right)}$, *mᵢ* ∈ 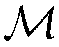 .

In some embodiments, the parameter information is carried in at least one of the following:
downlink control information (DCI);
a media access control (MAC) control element (CE) message; and
a radio resource control (RRC) message.

In some embodiments, the execution order of step S2105 is not limited in the embodiments of the present disclosure. For example, step S2105 may be executed simultaneously with step S2101 or may exchange the order with step S2101; or may be executed simultaneously with step S2102 or may exchange the order with step S2102; or may be executed simultaneously with step S2103 or may exchange the order with step S2103; or may be executed simultaneously with step S2104 or may exchange the order with step S2104.

In some embodiments, step S2105 is optional, that is, the transmitter may not send the parameter information.

In some embodiments, the parameter information may be sent by a network device.

In some embodiments, the receiver receives the parameter information.

In some embodiments, the receiver receives the parameter information sent by the transmitter.

In some embodiments, the receiver receives the parameter information sent by the network device.

In some embodiments, the parameter information may be agreed by a protocol.

In some embodiments, the parameter information may be obtained from a higher layer.

Step S2106: The receiver determines cyclic shift information of the plurality of sensing reference signal ports.

In some embodiments, the receiver determines the cyclic shift information of the plurality of sensing reference signal ports according to the parameter information.

For optional implementations of step S2106, reference may be made to the optional implementations of step S2101 and other associated parts in the embodiments relating to FIG. 2, and details are not described herein again.

Step S2107: The receiver measures a sensing quantity of each sensing reference signal port.

In some embodiments, the receiver receives the sensing reference signal, and according to the sensing reference signal and the cyclic shift information of each sensing reference signal port, measures a sensing quantity of each sensing reference signal port.

In some embodiments, taking one resource element (*k*, *l*) on which the sensing reference signal is located as an example, the receiver receives the sensing reference signal on the resource element (*k*, *l*), multiplies a received signal on the resource element (*k*, *l*) by the conjugate of *r*(*k*, *l*) , and then performs parameter estimation on the sensing quantity corresponding to each port according to the cyclic shift information of each sensing reference signal port. The cyclic shift information of each sensing reference signal port may be obtained from the parameter information.

It should be noted that the method provided in the embodiments of the present disclosure does not limit a frequency-domain pattern of the sensing reference signal, and may be applicable to any frequency-domain pattern. That is, the method provided in the embodiments of the present disclosure is not only applicable to a uniform frequency-domain pattern, but is also applicable to a non-uniform frequency-domain pattern.

According to the embodiments of the present disclosure, different ports of the sensing reference signal may occupy the same time-frequency resources. According to the precoding vector for cyclic shift and the modulation symbols mapped onto the resource elements, cyclic shift is performed on different ports of the sensing reference signal, so that a plurality of ports of the sensing reference signal are multiplexed. Therefore, sensing reference signals of different ports may be simultaneously sent on the same time-frequency resources by using different beams. On the one hand, simultaneous scanning by multiple beams is supported, and on the other hand, relatively low time-frequency resource overhead can be maintained.

In some embodiments, names of information and the like are not limited to the names recited in the embodiments, and terms such as "information," "message," "signaling," "report," "configuration," "indication," "instruction," and "notification" may be substituted for each other.

The sensing method involved in the embodiments of the present disclosure may include at least one of step S2101 to step S2107. For example, step S2102 may be implemented as an independent embodiment, step S2102 + step S2103 + step S2104 may be implemented as an independent embodiment, step S2105 may be implemented as an independent embodiment, and step S2106 + step S2107 may be implemented as an independent embodiment, but the present disclosure is not limited thereto.

In some embodiments, step S2105 to step S2107 are optional, and one or more of these steps may be omitted or replaced in different embodiments.

In the embodiments of the present disclosure, some or all of the steps and optional implementations thereof may be combined arbitrarily with some or all of the steps in other embodiments, and may also be combined arbitrarily with optional implementations of other embodiments.

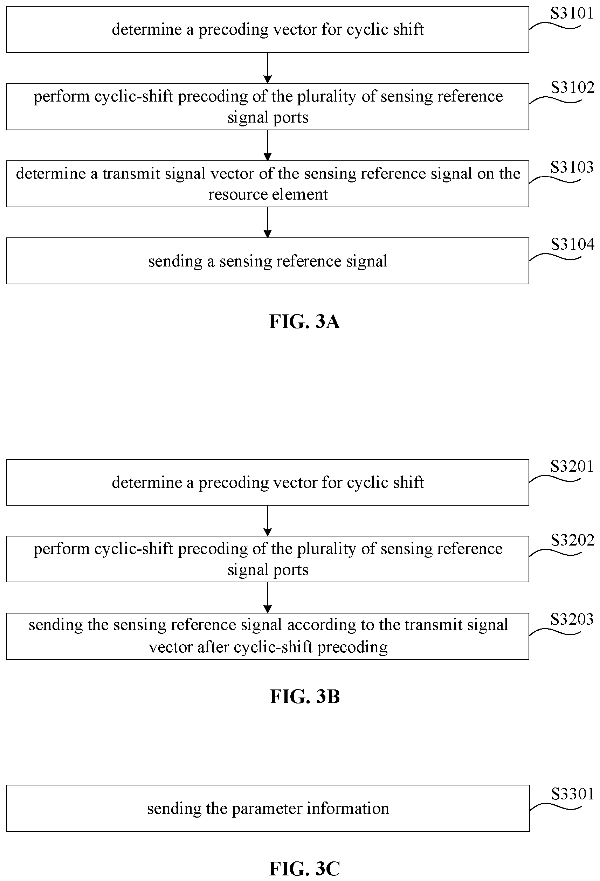

FIG. 3A is a schematic flowchart of a sensing method shown according to an embodiment of the present disclosure. As shown in FIG. 3A, an embodiment of the present disclosure relates to a sensing method, which may be applied to a transmitter, and the above method includes:

Step S3101, determining a precoding vector for cyclic shift.

In some embodiments, the precoding vector for cyclic shift includes cyclic shift information of a plurality of sensing reference signal ports, and cyclic-shift precoding may be performed on the plurality of sensing reference signal ports according to the precoding vector.

In some embodiments, the cyclic shift information of each sensing reference signal port includes a cyclic shift value of the corresponding port.

In some embodiments, the cyclic shift information of each sensing reference signal port includes a cyclic shift ratio of the corresponding port.

In some embodiments, the precoding vector for cyclic shift satisfies one of the following: ${w}_{cdd} \left(k\right) = {\left[{e}^{- j 2 {πα}_{cs}^{\left({m}_{0}\right)} k} {e}^{- j 2 {πα}_{cs}^{\left({m}_{1}\right)} k} ⋯ {e}^{- j 2 {πα}_{cs}^{\left({m}_{i}\right)} k} ⋯ {e}^{- j 2 {πα}_{cs}^{\left({m}_{\left|M\right|}-1\right)} k}\right]}^{T} ;$ ${w}_{cdd} \left(k\right) = {\left[{e}^{- j \frac{2 π}{{N}_{FFT}} {n}_{cs}^{\left({m}_{0}\right)} k} {e}^{- j \frac{2 π}{{N}_{FFT}} {n}_{cs}^{\left({m}_{1}\right)} k} ⋯ {e}^{- j \frac{2 π}{{N}_{FFT}} {n}_{cs}^{\left({m}_{i}\right)} k} ⋯ {e}^{- j \frac{2 π}{{N}_{FFT}} {n}_{cs}^{\left({m}_{\left|M\right|}-1\right)} k}\right]}^{T} ;$
where meanings of respective parameters in the above formulas may refer to the above description.

For optional implementations of Step S3101, reference may be made to the optional implementations of Step S2101 in FIG. 2 and other related parts in the embodiments involved in FIG. 2, and details are not described herein again.

Step S3102, performing cyclic-shift precoding of the plurality of sensing reference signal ports.

In some embodiments, according to the precoding vector for cyclic shift and modulation symbols, cyclic-shift precoding of the plurality of sensing reference signal ports is performed. Optionally, the above modulation symbols are symbols obtained by mapping a first sequence onto resource elements after constellation modulation (for example, constellation modulation such as QPSK). Optionally, the first sequence may be a root sequence of the sensing reference signal.

For optional implementations of Step S3102, reference may be made to the optional implementations of Step S2102 in FIG. 2 and other related parts in the embodiments involved in FIG. 2, and details are not described herein again.

Step S3103, determining a transmit signal vector of the sensing reference signal on the resource element.

In some embodiments, according to symbols of the plurality of sensing reference signal ports after cyclic-shift precoding, a transmit signal vector of the sensing reference signal on the resource element is determined.

In some embodiments, the transmit signal vector is a *N*_{Tx}-dimensional complex-valued transmit signal vector.

In some embodiments, taking one resource element (*k*, *l*) on which the sensing reference signal is located as an example, the transmit signal vector of the sensing reference signal on the resource element (*k*, *l*) satisfies: $x \left(k, l\right) = {β}_{sensingRS} ⋅ W ⋅ {w}_{cdd} \left(k\right) ⋅ r \left(k, l\right) ;$
where meanings of respective parameters in the above formula may refer to the above description.

For optional implementations of Step S3103, reference may be made to the optional implementations of Step S2103 in FIG. 2 and other related parts in the embodiments involved in FIG. 2, and details are not described herein again.

Step S3104, sending the sensing reference signal.

In some embodiments, the sensing reference signal is sent according to the transmit signal vector. Optionally, the above sensing reference signal is a multi-port sensing reference signal.

In some embodiments, taking one resource element (*k*, *l*) on which the sensing reference signal is located as an example, the transmit signal vector x(*k*, *l*) of the sensing reference signal on the resource element (*k*, *l*) is a *N*_{Tx}-dimensional complex-valued transmit signal vector. It may be understood that the w_{cdd}(*k*) includes *N*_{Tx} elements, respectively corresponding to *N*_{Tx} transmission antennas (or antenna ports) used by the transmitter for sending the sensing reference signal, and the multi-port sensing reference signal is sent on the resource element (*k*, *l*) through the *N*_{Tx} transmission antennas (or antenna ports).

According to the above embodiments, different ports of the sensing reference signal may occupy the same time-frequency resource. According to the precoding vector for cyclic shift and modulation symbols mapped onto the resource elements, cyclic shift is performed on different ports of the sensing reference signal, thereby multiplexing a plurality of ports of the sensing reference signal. Therefore, different ports of the sensing reference signal may be simultaneously sent by different beams on the same time-frequency resource. On the one hand, simultaneous scanning by multiple beams is supported; on the other hand, relatively low time-frequency resource overhead can be maintained.

FIG. 3B is a schematic flowchart of a sensing method shown according to an embodiment of the present disclosure. As shown in FIG. 3B, an embodiment of the present disclosure relates to a sensing method, which may be applied to a transmitter, and the above method includes:

Step S3201, determining a precoding vector for cyclic shift.

In some embodiments, the precoding vector for cyclic shift includes cyclic shift information of a plurality of sensing reference signal ports, and cyclic-shift precoding may be performed on the plurality of sensing reference signal ports according to the precoding vector.

In some embodiments, the cyclic shift information of each sensing reference signal port includes a cyclic shift value of the corresponding port.

In some embodiments, the cyclic shift information of each sensing reference signal port includes a cyclic shift ratio of the corresponding port.

In some embodiments, the precoding vector for cyclic shift satisfies one of the following: ${w}_{cdd} \left(k\right) = {\left[{e}^{- j 2 {πα}_{cs}^{\left({m}_{0}\right)} k} {e}^{- j 2 {πα}_{cs}^{\left({m}_{1}\right)} k} ⋯ {e}^{- j 2 {πα}_{cs}^{\left({m}_{i}\right)} k} ⋯ {e}^{- j 2 {πα}_{cs}^{\left({m}_{\left|M\right|}-1\right)} k}\right]}^{T} ;$ ${w}_{cdd} \left(k\right) = {\left[{e}^{- j \frac{2 π}{{N}_{FFT}} {n}_{cs}^{\left({m}_{0}\right)} k} {e}^{- j \frac{2 π}{{N}_{FFT}} {n}_{cs}^{\left({m}_{1}\right)} k} ⋯ {e}^{- j \frac{2 π}{{N}_{FFT}} {n}_{cs}^{\left({m}_{i}\right)} k} ⋯ {e}^{- j \frac{2 π}{{N}_{FFT}} {n}_{cs}^{\left({m}_{\left|M\right|}-1\right)} k}\right]}^{T} ;$
where meanings of respective parameters in the above formulas may refer to the above description.

For optional implementations of Step S3201, reference may be made to the optional implementations of Step S2101 in FIG. 2, the optional implementations of Step S3101 in FIG. 3A, and other related parts in the embodiments involved in FIG. 2 and FIG. 3A, and details are not described herein again.

Step S3202, performing cyclic-shift precoding of the plurality of sensing reference signal ports.

In some embodiments, according to the precoding vector for cyclic shift and modulation symbols, cyclic-shift precoding of the plurality of sensing reference signal ports is performed. Optionally, the above modulation symbols are symbols obtained by mapping a first sequence onto resource elements after constellation modulation (for example, constellation modulation such as QPSK). Optionally, the first sequence may be a root sequence of the sensing reference signal.

For optional implementations of Step S3202, reference may be made to the optional implementations of Step S2102 in FIG. 2, the optional implementations of Step S3102 in FIG. 3A, and other related parts in the embodiments involved in FIG. 2 and FIG. 3A, and details are not described herein again.

Step S3203, sending the sensing reference signal according to the transmit signal vector after cyclic-shift precoding.

In some embodiments, the transmit signal vector is a *N*_{Tx}-dimensional complex-valued transmit signal vector.

In some embodiments, taking one resource element (*k*, *l*) on which the sensing reference signal is located as an example, the transmit signal vector of the sensing reference signal on the resource element (*k, l*) satisfies:$x \left(k, l\right) = {β}_{sensingRS} ⋅ W ⋅ {w}_{cdd} \left(k\right) ⋅ r \left(k, l\right) ;$
where meanings of respective parameters in the above formula may refer to the above description.

In some embodiments, the above sensing reference signal is a multi-port sensing reference signal.

For optional implementations of Step S3203, reference may be made to the optional implementations of Step S2103 in FIG. 2, the optional implementations of Step S3103 in FIG. 3A, the optional implementations of Step S3104, and other related parts in the embodiments involved in FIG. 2 and FIG. 3A, and details are not described herein again.

In some embodiments, by performing cyclic-shift precoding of the plurality of sensing reference signal ports, a plurality of ports of the sensing reference signal may be multiplexed, so that a multi-port sensing reference signal may be sent.

According to the above embodiments, different ports of the sensing reference signal may occupy the same time-frequency resource. According to the precoding vector for cyclic shift and modulation symbols mapped onto the resource elements, cyclic-shift precoding is performed on different ports of the sensing reference signal, and a plurality of ports of the sensing reference signal may be multiplexed, so that a multi-port sensing reference signal may be sent. Therefore, different ports of the sensing reference signal may be simultaneously sent by different beams on the same time-frequency resource. On the one hand, simultaneous scanning by multiple beams is supported; on the other hand, relatively low time-frequency resource overhead can be maintained.

FIG. 3C is a schematic flowchart of a sensing method shown according to an embodiment of the present disclosure. As shown in FIG. 3C, an embodiment of the present disclosure relates to a sensing method, which may be applied to a transmitter, and the above method includes:
Step S3301, sending parameter information.

In some embodiments, the parameter information is used by a receiver to determine cyclic shift information of a plurality of sensing reference signal ports.

In some embodiments, the parameter information includes at least one of the following:
a set of port indexes of the sensing reference signal;
the ports of the sensing reference signal;
a cyclic shift ratio of at least one sensing reference signal port; and
a cyclic shift value of at least one sensing reference signal port.

In some embodiments, the parameter information is carried in at least one of the following:
DCI;
a MAC CE message; and
an RRC message.

In some embodiments, Step S3301 is optional, that is, the transmitter may not send the parameter information.

For optional implementations of Step S3301, reference may be made to the optional implementations of Step S2105 in FIG. 2 and other related parts in the embodiments involved in FIG. 2, and details are not described herein again.

According to the above embodiments, the transmitter may notify the parameter information to the receiver, for example, notify the cyclic shift ratio or the cyclic shift value of each sensing reference signal port to the receiver, thereby facilitating the receiver to determine the cyclic shift information of each sensing reference signal port according to the parameter information, and accordingly measure a sensing quantity of each sensing reference signal port.

It may be understood that the embodiments may be combined arbitrarily with one another. For example, part or all of the steps in different embodiments may be combined arbitrarily. For example, the embodiment of FIG. 3C may be combined arbitrarily with part or all of the steps in the embodiment of FIG. 2, the embodiment of FIG. 3C may be combined arbitrarily with part or all of the steps in the embodiment of FIG. 3A, and the embodiment of FIG. 3C may be combined arbitrarily with part or all of the steps in the embodiment of FIG. 3B.

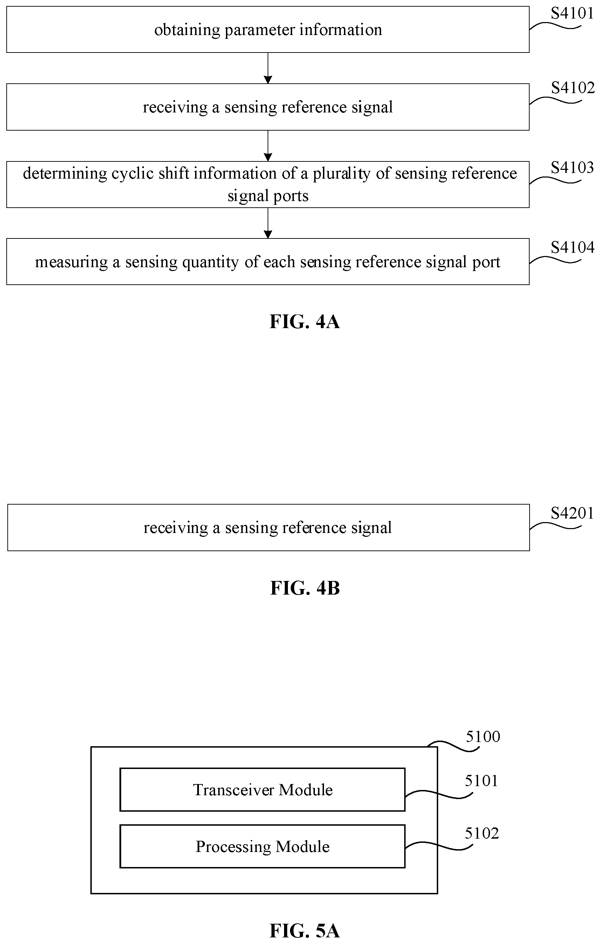

FIG. 4A is a schematic flowchart of a sensing method according to embodiments of the present disclosure. As shown in FIG. 4A, embodiments of the present disclosure relate to a sensing method, which can be applied to a receiver, and the above method includes:
Step S4101: obtaining parameter information.

In some embodiments, the parameter information includes at least one of the following:
a set of port indexes of a sensing reference signal;
a port of the sensing reference signal;
a cyclic shift ratio of at least one sensing reference signal port; and
a cyclic shift value of at least one sensing reference signal port.

In some embodiments, parameter information specified by a protocol is obtained.

In some embodiments, parameter information is obtained from a higher layer.

In some embodiments, parameter information is received.

In some embodiments, parameter information sent by a transmitter is received, but is not limited thereto, and parameter information sent by another subject may also be received.

In some embodiments, parameter information sent by a network device is received, but is not limited thereto, and parameter information sent by another subject may also be received.

In some embodiments, the parameter information is carried in at least one of the following:
DCI;
a MAC CE message; and
an RRC message.

For an optional implementation of step S4101, reference may be made to the optional implementation of step S2105 in FIG. 2, the optional implementation of step S3301 in FIG. 3C, and other associated parts in the embodiments involved in FIG. 2 and FIG. 3C, which are not described herein again.

Step S4102: receiving a sensing reference signal.

In some embodiments, the sensing reference signal sent by the transmitter is received. Optionally, the sensing reference signal is a multi-port sensing reference signal.

For an optional implementation of step S4102, reference may be made to the optional implementation of step S2104 in FIG. 2, the optional implementation of step S3104 in FIG. 3A, the optional implementation of step S3203 in FIG. 3B, and other associated parts in the embodiments involved in FIG. 2, FIG. 3A, and FIG. 3B, which are not described herein again.

In some embodiments, embodiments of the present disclosure do not limit the execution order of step S4102, which, for example, may exchange order with step S4101 or be performed simultaneously.

Step S4103: determining cyclic shift information of a plurality of sensing reference signal ports.

In some embodiments, the cyclic shift information of the plurality of sensing reference signal ports is determined according to the parameter information.

In some embodiments, embodiments of the present disclosure do not limit the execution order of step S4103, which, for example, may exchange order with step S4102 or be performed simultaneously.

For an optional implementation of step S4103, reference may be made to step S2101, the optional implementation of step S2106 in FIG. 2, and other associated parts in the embodiments involved in FIG. 2, which are not described herein again.

Step S4104: measuring a sensing quantity of each sensing reference signal port.

In some embodiments, according to the sensing reference signal and the cyclic shift information of each sensing reference signal port, a sensing quantity of each sensing reference signal port is measured.

For an optional implementation of step S4104, reference may be made to the optional implementation of step S2107 in FIG. 2 and other associated parts in the embodiments involved in FIG. 2, which are not described herein again.

According to the above embodiments, the receiver obtains parameter information and receives a sensing reference signal, determines cyclic shift information of each port of the sensing reference signal based on the parameter information, and accordingly measures a sensing quantity of each port of the sensing reference signal.

FIG. 4B is a schematic flowchart of a sensing method according to embodiments of the present disclosure. As shown in FIG. 4B, embodiments of the present disclosure relate to a sensing method, which can be applied to a receiver, and the above method includes:
Step S4201: receiving a sensing reference signal.

In some embodiments, the sensing reference signal sent by the transmitter is received. Optionally, the sensing reference signal is a multi-port sensing reference signal.

In some embodiments, the sensing reference signal is sent by the transmitter according to a precoding vector for cyclic shift and modulation symbols after the transmitter performs cyclic-shift precoding of a plurality of sensing reference signal ports. Herein, the precoding vector for cyclic shift contains cyclic shift information of the plurality of sensing reference signal ports. Optionally, the modulation symbols are symbols obtained by mapping a first sequence, after constellation modulation (for example, constellation modulation such as QPSK), onto resource elements. Optionally, the first sequence may be a root sequence of the sensing reference signal.

For an optional implementation of step S4201, reference may be made to the optional implementation of step S2104 in FIG. 2, the optional implementation of step S3104 in FIG. 3A, the optional implementation of step S3203 in FIG. 3B, and other associated parts in the embodiments involved in FIG. 2, FIG. 3A, and FIG. 3B, which are not described herein again.

It can be understood that the embodiments may be combined with one another in any manner. For example, some or all steps of different embodiments may be combined in any manner. For example, the embodiment of FIG. 4B may be combined in any manner with some or all steps of the embodiment of FIG. 2, the embodiment of FIG. 4B may be combined in any manner with some or all steps of the embodiment of FIG. 3A, the embodiment of FIG. 4B may be combined in any manner with some or all steps of the embodiment of FIG. 3B, the embodiment of FIG. 4B may be combined in any manner with some or all steps of the embodiment of FIG. 3C, and the embodiment of FIG. 4B may be combined in any manner with some or all steps of the embodiment of FIG. 4A.

Embodiments of the present disclosure propose a multi-port sensing reference signal based on cyclic delay diversity (CDD), wherein CDD is proposed to multiplex a plurality of ports of the sensing reference signal. For convenience of description, the sensing reference signal on one resource element (RE) can be expressed as: $x \left(k, l\right) = {β}_{sensingRS} ⋅ W ⋅ {w}_{cdd} \left(k\right) ⋅ r \left(k, l\right) ;$
where meanings of parameters in the above formula may refer to the above description.

As an optional implementation, the precoding vector satisfies: ${w}_{cdd} \left(k\right) = {\left[{e}^{- j 2 {πα}_{cs}^{\left({m}_{0}\right)} k} {e}^{- j 2 {πα}_{cs}^{\left({m}_{1}\right)} k} ⋯ {e}^{- j 2 {πα}_{cs}^{\left({m}_{i}\right)} k} ⋯ {e}^{- j 2 {πα}_{cs}^{\left({m}_{\left|M\right|}-1\right)} k}\right]}^{T} ;$
where ${α}_{cs}^{\left({m}_{i}\right)}$ is a cyclic shift ratio (cyclic shift ratio) of a sensing reference signal port *mᵢ*, mᵢ ∈ 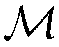 .

In some embodiments, ${α}_{cs}^{\left({m}_{i}\right)} ∈ \left\{0, \frac{1}{2}, \frac{1}{4}, \frac{3}{4}\right\}$.

As an optional implementation, the precoding vector w_{cdd}(*k*) satisfies: ${w}_{cdd} \left(k\right) = {\left[{e}^{- j \frac{2 π}{{N}_{FFT}} {n}_{cs}^{{\left({m}_{0}\right)}_{k}}} {e}^{- j \frac{2 π}{{N}_{FFT}} {n}_{cs}^{{\left({m}_{1}\right)}_{k}}} ⋯ {e}^{- j \frac{2 π}{{N}_{FFT}} {n}_{cs}^{{\left({m}_{i}\right)}_{k}}} ⋯ {e}^{- j \frac{2 π}{{N}_{FFT}} {n}_{cs}^{{\left({m}_{\left|M\right| - 1}\right)}_{k}}}\right]}^{T} ;$
where ${n}_{cs}^{\left({m}_{i}\right)}$ is a cyclic shift value (cyclic shift) of a sensing reference signal port *mᵢ*, mᵢ ∈ 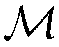 .

In some embodiments, ${n}_{cs}^{\left({m}_{i}\right)} ∈ \left\{0, \frac{{N}_{FFT}}{2}, \frac{{N}_{FFT}}{4}, \frac{3 {N}_{FFT}}{4}\right\}$. Herein, *N*_{FFT} is the number of FFT points (FFT size).

It should be noted that embodiments of the present disclosure are applicable to any frequency-domain pattern. In other words, they are applicable not only to a uniform frequency-domain pattern, but also to a non-uniform pattern.

The sensing transmitter notifies the sensing receiver of at least one of the following parameters through signaling (for example, through at least one of signaling such as DCI, MAC CE, and RRC):
a set of port indexes of the sensing reference signal: 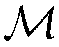 ;
a number of ports of the sensing reference signal: | 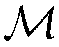 |;
a cyclic shift ratio of each sensing reference signal port: ${α}_{cs}^{\left({m}_{i}\right)}$, **[***mᵢ* ∈ 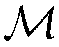 .
a cyclic shift of each sensing reference signal port: ${n}_{cs}^{\left({m}_{i}\right)}$, *mᵢ* ∈ 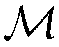 .

According to the above embodiments, the multi-port sensing reference signal based on CDD proposed in embodiments of the present disclosure supports simultaneous scanning of multiple beams and maintains relatively low time-frequency resource overhead.

Embodiments of the present disclosure further propose an apparatus for implementing any one of the above methods. For example, an apparatus is proposed, and the above apparatus includes units or modules configured to implement the various steps performed by the transmitter in any one of the above methods. For another example, another apparatus is further proposed, including units or modules configured to implement the various steps performed by the receiver in any one of the above methods.

It should be understood that the division of the units or modules in the above apparatuses is merely a logical function division. In actual implementation, all or part thereof may be integrated into one physical entity, or may be physically separated. In addition, the units or modules in the apparatus may be implemented in the form of software called by a processor. For example, the apparatus includes a processor, the processor is connected to a memory, instructions are stored in the memory, and the processor calls the instructions stored in the memory to implement any one of the above methods or implement functions of the various units or modules of the above apparatuses, wherein the processor is, for example, a general-purpose processor, for example, a central processing unit (CPU) or a microprocessor, and the memory is a memory inside the apparatus or a memory outside the apparatus. Alternatively, the units or modules in the apparatus may be implemented in the form of a hardware circuit, and functions of part or all of the units or modules may be implemented by designing the hardware circuit. The above hardware circuit can be understood as one or more processors. For example, in one implementation, the above hardware circuit is an application-specific integrated circuit (ASIC), and functions of part or all of the units or modules are implemented by designing the logical relationships of elements in the circuit. For another example, in another implementation, the above hardware circuit is a programmable logic device (PLD), which may be implemented by a field programmable gate array (FPGA) as an example, and may include a large number of logic gate circuits, and the connection relationships between the logic gate circuits are configured through a configuration file, thereby implementing functions of part or all of the above units or modules. All of the units or modules of the above apparatuses may all be implemented in the form of software called by a processor, or all be implemented in the form of a hardware circuit, or part be implemented in the form of software called by a processor and the remaining part be implemented in the form of a hardware circuit.

In embodiments of the present disclosure, a processor is a circuit having signal processing capability. In one implementation, the processor may be a circuit having instruction reading and running capability, for example, a central processing unit (CPU), a microprocessor, a graphics processing unit (GPU) (which can be understood as a microprocessor), or a digital signal processor (DSP), etc. In another implementation, the processor may implement certain functions through logical relationships of a hardware circuit, wherein the logical relationships of the hardware circuit are fixed or reconfigurable. For example, the processor is a hardware circuit implemented by an application-specific integrated circuit (ASIC) or a programmable logic device (PLD), for example, an FPGA. In a reconfigurable hardware circuit, a process in which the processor loads a configuration document to implement configuration of the hardware circuit can be understood as a process in which the processor loads instructions to implement functions of part or all of the above units or modules. In addition, a hardware circuit designed for artificial intelligence may also be used, which can be understood as an ASIC, for example, a neural network processing unit (NPU), a tensor processing unit (TPU), a deep learning processing unit (DPU), etc.

FIG. 5A is a schematic structural diagram of a transmitter proposed in embodiments of the present disclosure. As shown in FIG. 5A, the transmitter 5100 may include at least one of: a transceiver module 5101, a processing module 5102, and the like. In some embodiments, the foregoing processing module is configured to determine a precoding vector for cyclic shift. In some embodiments, the foregoing processing module is configured to perform cyclic-shift precoding of a plurality of sensing reference signal ports according to modulation symbols and the precoding vector for cyclic shift. In some embodiments, the foregoing transceiver module is configured to send a sensing reference signal according to a transmit signal vector after cyclic-shift precoding. Optionally, the foregoing transceiver module is used to perform at least one of communication steps such as sending and/or receiving performed by the transmitter in any of the foregoing methods (for example, steps S2104 and S2105, but not limited thereto), and details are not described herein again. Optionally, the foregoing processing module is used to perform at least one of other steps performed by the transmitter in any of the foregoing methods (for example, steps S2101, S2102, and S2103, but not limited thereto), and details are not described herein again.

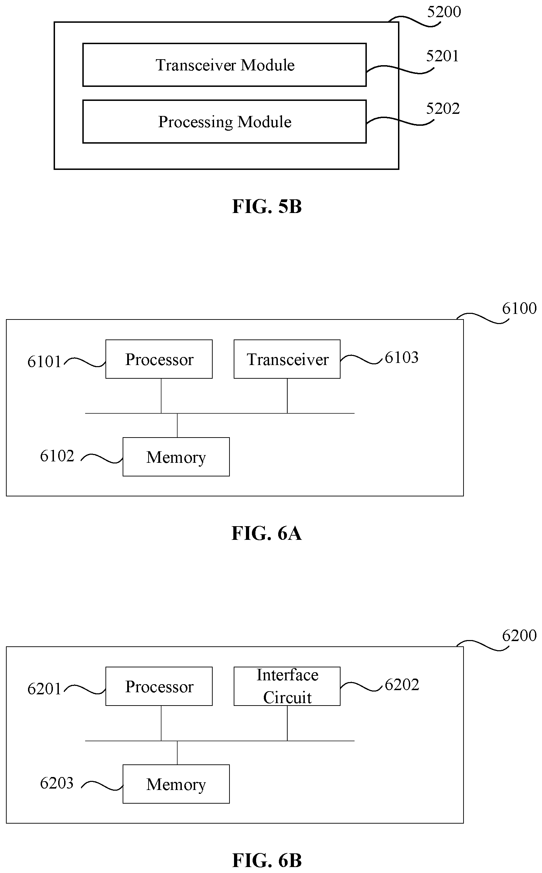

FIG. 5B is a schematic structural diagram of a receiver proposed in embodiments of the present disclosure. As shown in FIG. 5B, the receiver 5200 may include at least one of: a transceiver module 5201, a processing module 5202, and the like. In some embodiments, the foregoing transceiver module is configured to receive a sensing reference signal. Optionally, the foregoing transceiver module is used to perform at least one of communication steps such as sending and/or receiving performed by the receiver in any of the foregoing methods, and details are not described herein again. Optionally, the foregoing processing module is used to perform at least one of other steps performed by the receiver in any of the foregoing methods (for example, steps S2106 and S2107, but not limited thereto), and details are not described herein again.

In some embodiments, the transceiver module may include a sending module and/or a receiving module, and the sending module and the receiving module may be separate or may be integrated together. Optionally, the transceiver module may be interchangeable with a transceiver.

In some embodiments, the processing module may be one module, or may include a plurality of sub-modules. Optionally, the foregoing plurality of sub-modules respectively perform all or some of the steps required to be performed by the processing module. Optionally, the processing module may be interchangeable with a processor.

FIG. 6A is a schematic structural diagram of a communication device 6100 proposed in embodiments of the present disclosure. The communication device 6100 may be a network device (for example, an access network device, and the like), or may be a terminal (for example, user equipment, and the like), or may be a chip, a chip system, or a processor, and the like, supporting a network device in implementing any of the foregoing methods, and may also be a chip, a chip system, or a processor, and the like, supporting a terminal in implementing any of the foregoing methods. The communication device 6100 may be used to implement the methods described in the foregoing method embodiments, and reference may specifically be made to the descriptions in the foregoing method embodiments.

As shown in FIG. 6A, the communication device 6100 includes one or more processors 6101. The processor 6101 may be a general processor or a special processor, and the like; for example, it may be a baseband processor or a central processor. The baseband processor may be used to process a communication protocol and communication data, and the central processor may be used to control a communication apparatus (for example, a base station, a baseband chip, terminal equipment, a terminal equipment chip, a distributed unit (DU), or a central unit (CU), and the like), execute a program, and process data of the program. The communication device 6100 is used to perform any of the foregoing methods.

In some embodiments, the communication device 6100 further includes one or more memories 6102 for storing instructions. Optionally, all or part of the memory 6102 may also be located outside the communication device 6100.

In some embodiments, the communication device 6100 further includes one or more transceivers 6103. When the communication device 6100 includes one or more transceivers 6103, the Transceiver 6103 performs at least one of communication steps such as sending and/or receiving in the foregoing methods (for example, steps S2104 and S2105, but not limited thereto), and the processor 6101 performs at least one of other steps (for example, steps S2101, S2102, S2103, S2106, and S2107, but not limited thereto).

In some embodiments, the transceiver may include a receiver and/or a transmitter, and the receiver and the transmitter may be separate or may be integrated together. Optionally, the terms transceiver, transceiver unit, transceiver, transceiver circuit, and the like may be interchangeable, the terms transmitter, transmitting unit, transmitter, transmitting circuit, and the like may be interchangeable, and the terms receiver, receiving unit, receiver, receiving circuit, and the like may be interchangeable.

In some embodiments, the communication device 6100 may include one or more interface circuits. Optionally, the interface circuit is connected to the memory 6102, and the interface circuit may be used to receive signals from the memory 6102 or other apparatuses, and may be used to send signals to the memory 6102 or other apparatuses. For example, the interface circuit may read instructions stored in the memory 6102 and send the instructions to the processor 6101.

The communication device 6100 in the descriptions of the foregoing embodiments may be a network device or a terminal, but the scope of the communication device 6100 described in the present disclosure is not limited thereto, and the structure of the communication device 6100 may not be limited by FIG. 6A. The communication device may be an independent device or may be a part of a larger device. For example, the communication device may be: (1) an independent integrated circuit IC, or a chip, or a chip system or subsystem; (2) a set having one or more ICs; optionally, the foregoing set of ICs may also include a storage component for storing data and programs; (3) an ASIC, for example, a modem (Modem); (4) a module that may be embedded in another device; (5) a receiver, terminal equipment, intelligent terminal equipment, a cellular phone, a wireless device, a handset, a mobile unit, vehicle-mounted equipment, a network device, a cloud device, an artificial intelligence device, and the like; and (6) other devices, and the like.

FIG. 6B is a schematic structural diagram of a chip 6200 proposed in embodiments of the present disclosure. For the case in which the communication device 6100 may be a chip or a chip system, reference may be made to the schematic structural diagram of the chip 6200 shown in FIG. 6B, but not limited thereto.

The chip 6200 includes one or more processors 6201, and the chip 6200 is used to perform any of the foregoing methods.

In some embodiments, the chip 6200 further includes one or more interface circuits 6202. Optionally, the interface circuit 6202 is connected to the memory 6203, the interface circuit 6202 may be used to receive signals from the memory 6203 or other apparatuses, and the interface circuit 6202 may be used to send signals to the memory 6203 or other apparatuses. For example, the interface circuit 6202 may read instructions stored in the memory 6203 and send the instructions to the processor 6201.

In some embodiments, the interface circuit 6202 performs at least one of communication steps such as sending and/or receiving in the foregoing methods (for example, steps S2104 and S2105, but not limited thereto), and the processor 6201 performs at least one of other steps (for example, steps S2101, S2102, S2103, S2106, and S2107, but not limited thereto).

In some embodiments, the terms interface circuit, interface, transceiving pin, transceiver, and the like may be interchangeable.

In some embodiments, the chip 6200 further includes one or more memories 6203 for storing instructions. Optionally, all or part of the memory 6203 may be located outside the chip 6200.

The present disclosure further provides a storage medium, where instructions are stored on the foregoing storage medium, and when the foregoing instructions are run on the communication device 6100, the communication device 6100 is caused to perform any of the foregoing methods. Optionally, the foregoing storage medium is an electronic storage medium. Optionally, the foregoing storage medium is a computer-readable storage medium, but is not limited thereto, and may also be a storage medium readable by another apparatus. Optionally, the foregoing storage medium may be a non-transitory storage medium, but is not limited thereto, and may also be a transitory storage medium.

The present disclosure further provides a program product, where when the foregoing program product is executed by the communication device 6100, the communication device 6100 is caused to perform any of the foregoing methods. Optionally, the foregoing program product is a computer program product.

The present disclosure further provides a computer program, where when the computer program is run on a computer, the computer is caused to perform any of the foregoing methods.

## Claims

1. A sensing method, performed by a transmitter, and the method comprising:
determining a precoding vector for cyclic shift, wherein the precoding vector comprises cyclic shift information of a plurality of sensing reference signal ports;
performing cyclic-shift precoding of the plurality of sensing reference signal ports according to the precoding vector and modulation symbols, wherein the modulation symbols are symbols obtained by mapping a first sequence subjected to constellation modulation onto resource elements; and
sending a sensing reference signal according to a transmit signal vector after cyclic-shift precoding.

2. The method according to claim 1, wherein the transmit signal vector satisfies: $x \left(k, l\right) = {β}_{sensingRS} ⋅ W ⋅ {w}_{cdd} \left(k\right) ⋅ r \left(k, l\right)$ wherein (*k, l*) denotes the resource element located on an orthogonal frequency division multiplexing (OFDM) symbol numbered *l* and an OFDM subcarrier numbered *k*, x(*k*, *l*) denotes the transmit signal vector of the sensing reference signal on the resource element (*k*, *l*), x(*k*, *l*) denotes a power scaling factor, W denotes a spatial precoding matrix, x(*k*, *l*) denotes the precoding vector acting on the OFDM subcarrier numbered *k*, and x(*k*, *l*) denotes the modulation symbol mapped onto the resource element (*k*, *l*).

3. The method according to claim 1 or 2, wherein the precoding vector satisfies one of the following: ${w}_{cdd} \left(k\right) = {\left[{e}^{- j 2 {πα}_{cs}^{{\left({m}_{0}\right)}_{k}}} {e}^{- j 2 {πα}_{cs}^{{\left({m}_{1}\right)}_{k}}} ⋯ {e}^{- j 2 {πα}_{cs}^{{\left({m}_{i}\right)}_{k}}} ⋯ {e}^{- j 2 {πα}_{cs}^{{\left({m}_{\left|M\right| - 1}\right)}_{k}}}\right]}^{T}$ ${w}_{cdd} \left(k\right) = {\left[{e}^{- j \frac{2 π}{{N}_{FFT}} {n}_{cs}^{{\left({m}_{0}\right)}_{k}}} {e}^{- j \frac{2 π}{{N}_{FFT}} {n}_{cs}^{{\left({m}_{1}\right)}_{k}}} ⋯ {e}^{- j \frac{2 π}{{N}_{FFT}} {n}_{cs}^{{\left({m}_{i}\right)}_{k}}} ⋯ {e}^{- j \frac{2 π}{{N}_{FFT}} {n}_{cs}^{{\left({m}_{\left|M\right| - 1}\right)}_{k}}}\right]}^{T}$ wherein *x*(*k*, *l*) denotes the precoding vector acting on the OFDM subcarrier numbered *k*, *e* is a natural constant, *j* is an imaginary unit, x(*k*, *l*) denotes a cyclic shift ratio of a sensing reference signal port *mᵢ*, ${n}_{cs}^{\left({m}_{i}\right)}$ denotes a cyclic shift value of a sensing reference signal port mᵢ, | 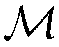 | denotes the number of ports of the sensing reference signal, and *N*_{FFT} is a fast Fourier transform (FFT) point number.

4. The method according to any one of claims 1 to 3, wherein the method further comprises:
sending parameter information to a receiver, wherein the parameter information is used by the receiver to determine the cyclic shift information of the plurality of sensing reference signal ports.

5. The method according to claim 4, wherein the parameter information comprises at least one of the following
a cyclic shift ratio of one sensing reference signal port among the plurality of sensing reference signal ports; and
a cyclic shift value of one sensing reference signal port among the plurality of sensing reference signal ports.

6. A sensing method, wherein the method is performed by a receiver, and the method comprises:
receiving a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

7. The method according to claim 6, wherein the method further comprises:
receiving parameter information;
determining cyclic shift information of the plurality of sensing reference signal ports according to the parameter information; and
measuring, according to the sensing reference signal and the cyclic shift information of each sensing reference signal port, a sensing quantity of each sensing reference signal port.

8. The method according to claim 7, wherein the parameter information comprises at least one of the following:
a cyclic shift ratio of one sensing reference signal port among the plurality of sensing reference signal ports; and
a cyclic shift value of one sensing reference signal port among the plurality of sensing reference signal ports.

9. A transmitter, comprising:
a processing module, configured to determine a precoding vector for cyclic shift, wherein the precoding vector comprises cyclic shift information of a plurality of sensing reference signal ports, and configured to perform cyclic-shift precoding of the plurality of sensing reference signal ports according to the precoding vector and modulation symbols, wherein the modulation symbols are symbols obtained by mapping a first sequence subjected to constellation modulation onto resource elements; and
a transceiver module, configured to send a sensing reference signal according to a transmit signal vector after cyclic-shift precoding.

10. A receiver, comprising:
a transceiver module, configured to receive a sensing reference signal;
wherein the sensing reference signal is sent by a transmitter after the transmitter performs cyclic-shift precoding of a plurality of sensing reference signal ports according to modulation symbols and a precoding vector for cyclic shift, and according to a transmit signal vector after cyclic-shift precoding, wherein the precoding vector comprises cyclic shift information of the plurality of sensing reference signal ports, and the modulation symbols are symbols obtained by mapping a first sequence subjected to constellation modulation onto resource elements.

11. A sensing apparatus, comprising:
one or more processors;
wherein the sensing apparatus is configured to perform the sensing method according to any one of claims 1 to 5.

12. A sensing apparatus, comprising:
one or more processors;
wherein the sensing apparatus is configured to perform the sensing method according to any one of claims 6 to 8.

13. A sensing system, comprising:
a transmitter, configured to perform the sensing method according to any one of claims 1 to 5; and
a receiver, configured to perform the sensing method according to any one of claims 6 to 8.

14. A storage medium storing instructions, wherein when the instructions are run on a communication device, the communication device is caused to perform the sensing method according to any one of claims 1 to 5, or perform the sensing method according to any one of claims 6 to 8.
